# EUROPEAN PATENT APPLICATION

(11) **EP 4 603 888 A1**
(43) Date of publication of application: **20.08.2025**
(21) Application number: 24158043.0
(22) Date of filing: 16.02.2024
(51) Int. Cl.: G02B 21/00, G02B 21/16, G02B 21/36, G01N 21/64

(54) **DEVICE AND METHOD FOR CONTROLLING A FLUORESCENCE MICROSCOPE, FLUORESCENCE MICROSCOPE AND COMPUTER PROGRAM**

(71) Applicant: Leica Microsystems CMS GmbH, 35578 Wetzlar (DE)
(72) Inventor: Laskey, Peter, 35578 Wetzlar (DE)
(74) Representative: Schaumburg und Partner Patentanwälte mbB

(57) **Abstract**

A device (102) for controlling a fluorescence microscope (100) having multiple imaging channels (300a, 300b, 300c), each imaging channel (300a, 300b, 300c) being adapted to generate image data representing a sample (104), comprises a user interface (130) configured to receive a user input including a primary set-up information to be used in a set-up process for setting up each imaging channel (300a, 300b, 300c). The device (102) further comprises a processor (136) configured to execute the set-up process for each imaging channel (300a, 300b, 300c) to determine an imaging setting specific to said imaging channel (300a, 300b, 300c) based on the primary set-up information. The processor (136) is further configured to cause the fluorescence microscope (100) to generate the image data in each imaging channel (300a, 300b, 300c) in accordance with the imaging setting specific to said imaging channel (300a, 300b, 300c). The primary set-up information assigned to each imaging channel (300a, 300b, 300c) includes a sample structure information specifying a structural feature of the sample (104).

## Description

### Technical fields

The invention relates to a device for controlling a fluorescence microscope and a fluorescence microscope. The invention further relates to a method and a computer program for controlling a fluorescence microscope.

### Background

Multichannel fluorescence microscopy uses several different fluorophores, such as fluorescent dyes or proteins, that emit light at different wavelengths to label different components of a sample, allowing simultaneous visualization of multiple targets in the same specimen. Each fluorophore is selected for its unique excitation and emission spectra, allowing differentiation of multiple targets through the use of optical filters that select for specific emission wavelengths and/or hyper spectral imaging devices.

In the context of multichannel fluorescence microscopy, the word channel refers to a distinct set of imaging parameters used to selectively image at least one of the different fluorophores within the sample. For example, each channel may be defined by a specific combination of components, for example excitation light sources, excitation filters, dichroic mirrors, and emission filters, tailored to the unique excitation and emission spectra of the fluorophores of interest. Channels may further be defined by a detector setting, for example an integration time or a gain setting.

The images captured in each channel, corresponding to the different fluorophores, may be analyzed individually and/or combined into a composite image that visualizes the spatial relationships among the labeled components within the sample. In order to analyze and/or combine the images captured in each channel, the images need to be processed based on image processing or analysis parameters, for example threshold values for identifying certain structures. Selecting the correct parameters for image acquisition, processing, and analysis requires in-depth technical knowledge of the fluorescence microscope being used. This makes it more difficult for a novice user to achieve good results.

### Summary

It is an object to provide a device and a method for controlling a fluorescence microscope that assist a user in image acquisition with the fluorescence microscope.

The aforementioned object is achieved by the subject-matter of the independent claims. Advantageous embodiments are defined in the dependent claims and the following description.

The proposed device for controlling a fluorescence microscope having multiple imaging channels, each imaging channel being adapted to generate image data representing a sample, comprises a user interface configured to receive a user input including a primary set-up information to be used in a set-up process for setting up each imaging channel. The device further comprises a processor configured to execute the set-up process for each imaging channel to determine an imaging setting specific to said imaging channel based on the primary set-up information. The processor is further configured to cause the fluorescence microscope to generate the image data in each imaging channel in accordance with the imaging setting specific to said imaging channel. The primary set-up information assigned to each imaging channel includes a sample structure information specifying a structural feature of the sample.

The typical setup of a fluorescence microscopes follows a dye-centric approach, where a user defines settings of the optical system and the detector to match a specific fluorophore attached to the to target structure of interest. This typical setup routine is a systems-based approach in which the user determines the imaging setting of each imaging channel manually based on their previous experience and/or technical knowledge of the fluorescence microscope. The systems-based approach puts the focus on an image acquisition step. Contrary thereto, a structure-based approach for setting up the imaging channels is proposed. This structure-based approach is based on the user identifying the type of structure the dye is attached to by providing the sample structure information, and the device determining the imaging setting of each imaging channel automatically based on the user provided information. Further, the proposed structure-based approach puts the focus on sample preparation, data acquisition, data processing, and the analysis workflow instead, making it possible to integrate these steps into a single seamless workflow.

For receiving the sample structure information, the device comprises the user interface. The user interface may comprise input devices such as a computer mouse and/or a keyboard, output devices such as displays, and/or combined devices such as touchscreens. The processor may be configured to control the user interface to present a list of exemplary structural features for the user to select from, for example in the form of a drop-down menu. After the user has selected a structural feature for each of the imaging channels, the processor determines the imaging setting based thereupon. Determining the imaging setting may comprise determining one or more imaging parameters, such as an excitation wavelength and/or a detector gain. More detail on the imaging settings is provided below with reference to further embodiments. The processor then performs the necessary steps to set up the imaging channels based on the imaging settings. By automatically performing the setup of the fluorescence microscope to image the different structural features of the sample, the device greatly assists the user, in particular providing valuable assistance to novice users allowing them to capture images using the fluorescence microscope without in-depth technical knowledge and/or years of experience.

In an embodiment the sample structure information includes an information specifying a cellular structure of the sample. For example, the user may specify that the structural features to be imaged in one of the imaging channels are cell nuclei, mitochondria, or actin filaments. Based on this information the processor can for example determine a feature scaling setting used by some deconvolution methods to adjust for an objects size. Knowledge regarding an object's symmetries or asymmetry and whether the object is solid or hollow, for example a membrane would be considered a hollow object, can also aid signal processing algorithms.

In another embodiment the processor is configured to use at least one secondary set- up information in the set-up process. The secondary set-up information is a userprovided information about the imaging process that is not related to the structural feature to be imaged. Examples are provided below with reference to further embodiments. Based on the secondary set-up information, the processor can determine the imaging setting more accurately.

In another embodiment the at least one secondary set-up information includes a dye information specific to each imaging channel, the dye information specifying a fluorescent dye to be used for imaging the sample in said imaging channel. Based on the information about the dye used in the imaging the processor can in particular determine imaging parameters related to excitation, such as an excitation wavelength, and detection, such as the wavelength band for an emission filter and/or a detection integration time.

In another embodiment the user interface is configured to receive a user input including the dye information. For example, the user selects the dye information, such as the name of the dye, from a list presented by the user interface. Alternatively, the user may enter, for example, an excitation spectrum and/or an emission spectrum manually.

In another embodiment the imaging setting specific to each imaging channel comprises at least one parameter selected from a group including an optical component to be used, an excitation wavelength, a fluorescence wavelength, an illumination type, an illumination intensity, a detector integration time, a detector gain, a read-out mode, and a detector bit depth. The optical component may be at least one of an objective lens, a tube lens, a filter cube, a dichroic, an excitation filter, and an emission filter. Further, the at least one parameter may be spectral detection window in case the fluorescence microscope is a confocal microscope. The aforementioned parameters form a distinct set of imaging parameters that define the imaging channel in the context of fluorescence microscopy. Based on this set of parameters the imaging channel can be set up by the device.

In another embodiment the processor is further configured to determine an image processing setting specific to each imaging channel based on the sample structure information and the imaging setting. The processor may be configured to process the image data in accordance with the image processing setting and may be adapted to cause a display to visualize the processed image data. The images captured in each of the imaging channels may be processed in a number of ways. For example, a background noise may be removed to enhance the signal-to-noise ratio of the fluorescence signal from the target, or the fluorescence signal may be differentiated from the background by setting a specific intensity value, above which pixels are considered part of the signal and below which they are considered background. Other image enhancement techniques may comprise deconvolution, computational clearing, denoising, or other image processing. All these processes have certain image processing parameters associated with them that characterize the respective process. Depending on, for example, the dimensions of the structural feature the setting required to correctly process each channel may vary significantly. How well the image processing can improve the images depends on how well the parameters are adapted to the specifics of the sample and the image acquisition. Image processing may also involve merging the images captured in different channels, for example to display the merged image on screen for visual inspection and validation. Depending on the size, on the labelling density and target abundance, an image brightness and number of channels, different image scaling and signal to noise ratios may be required to produce an optimum merged image. In this embodiment, the processor determines the image processing parameters as part of the image processing setting, automating the image processing based on the sample structure information and the imaging setting. Thereby, the device aids the user, in particular a novice user, allowing the user to process the images without in-depth technical knowledge and/or years of experience.

In another embodiment the processor is further configured to determine an analysis setting specific to each imaging channel based on the sample structure information and the imaging setting. The processor may be configured to analyze the processed image data visualized on the display in accordance with the analysis setting. Typically, the images of the sample are captured to perform some sort of analysis with the intention of extracting quantifiable metrics allowing the user to identify key differences between populations, for example phenotypes, impact of mutations, phases of biological process, such as mitosis, relative abundance and distribution concentrations of biologically active compounds, such as drugs and signaling molecules. For example, the intensity of fluorescence signals may be measured within a specified region of interest (ROI) to assess the concentration or distribution of the labeled targets, such as a number of mitochondria per cell. The analysis is defined by the analysis setting which, for example, comprises a number of analysis parameters, such as the ROI or threshold values, such as wavelengths, x-,y- and z-dimensions, brightness, proximity to neighboring objects, based on which discrete objects of interest can be recognized, such as different cell types, mitochondria, ribosomes, cell nucleus or microtubule filaments. Depending on the properties of each object the analysis setting required to identify them will vary significantly. The processor may determine the analysis setting based on a predetermined database of possible analysis settings and/or based on the output of a machine learning algorithm. The latter option is described in the following with reference to a further embodiment. By automating the image analysis, the device provides aid to the user, allowing the user to perform image analyses more easily.

In another embodiment the processor is configured to analyze the processed image data using a machine learning algorithm. Machine learning algorithms excel at detecting patterns that even skilled observers miss. They are therefore uniquely suited to assist the user in performing image analyses. For example, the processor may determine at least some of the analysis parameters based on the output of the machine learning algorithm. Alternatively, or additionally, the processor may be configured to perform an image analysis, such as an image segmentation or a noise reduction, using the machine learning algorithm. For example, a machine learning algorithm may be used to identify different cellular structures automatically. Based on morphology and dynamic data the device may also automatically provide the user with appropriate analysis tools for cell health offering additional data that can be used to deuce further information about a population of cells. For example, one nucleus per cell means the cell is a normal quiescent cell, condense chromatin indicates a mitotic cell, and a fragmented nuclei means the cell is apoptotic. Machine learning algorithms may further be used to automatically point out hidden patterns to the user. For example, the user is looking at expressions of a certain viral protein. The machine learning algorithm may detect, without the user explicitly asking, that none of the cells expressing the viral protein are mitotic and/or have 10% brighter nuclei. Automatically offering the user this "baseline" information enables the user to spot subtle differences between populations that they would otherwise not have picked up on unless they were specifically looking for it. In particular, deep learning algorithms may be used to analyze the processed image data, such as Convolutional Neural Networks. The machine learning algorithm may be trained in supervised learning using the large amount of publicly available image data that has been labelled accordingly.

The invention also relates to a fluorescence microscope having multiple imaging channels, each imaging channel being adapted to generate image data representing a sample. The fluorescence microscope comprises the above-described device. The fluorescence microscope therefore has the same advantages as the device described above. The device described above may be supplemented with the features described in this document in connection with the fluorescence microscope.

The invention also relates to a method for controlling a fluorescence microscope having multiple imaging channels, each imaging channel being adapted to generate image data representing a sample. The method comprises the following steps: Receiving a user input by means of a user interface, the user input including a primary set-up information to be used in a set-up process for setting up each imaging channel. Executing the set-up process for each imaging channel to determine an imaging setting specific to said imaging channel based on the primary set-up information. Causing the fluorescence microscope to generate the image data in each imaging channel in accordance with the imaging setting specific to said imaging channel. The primary set- up information assigned to each imaging channel includes a sample structure information specifying a structural feature of the sample.

The method has the same advantages as the device described above. In particular, the method may be supplemented with the features of the dependent claims directed at the device. Furthermore, the device and/or the fluorescence microscope described above may be supplemented with the features described in this document in connection with the method.

The invention further relates to a computer program with a program code for performing the method described above. The computer program has the same advantages as the device and the method described above. In particular, the computer program may be supplemented with the features of the dependent claims directed at the device and/or the method. Furthermore, the device, the fluorescence microscope and/or the method described above may be supplemented with the features described in this document in connection with the computer program.

### Short Description of the Figures

Hereinafter, specific embodiments are described referring to the drawings, wherein:
- Figure 1: a schematic view of a fluorescence microscope comprising a device for controlling the fluorescence microscope according to an embodiment;
- Figure 2: is a flowchart of a method for controlling a fluorescence microscope; and
- Figure 3: is a schematic view of three exemplary imaging channels of the fluorescence microscope according to Figure 1.

### Detailed Description

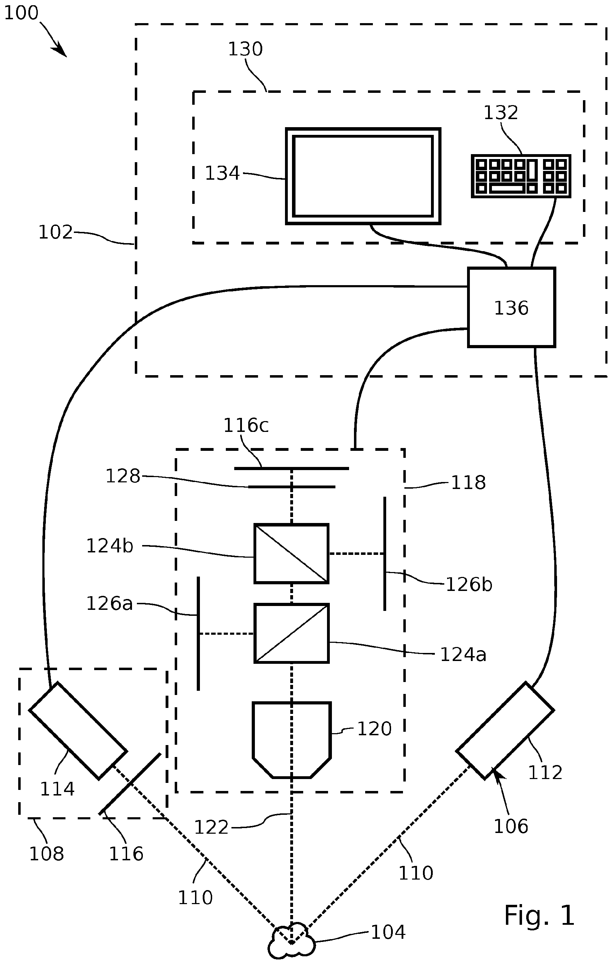

Figure 1 is a schematic view of a fluorescence microscope 100 comprising a device 102 for controlling a fluorescence microscope according to an embodiment.

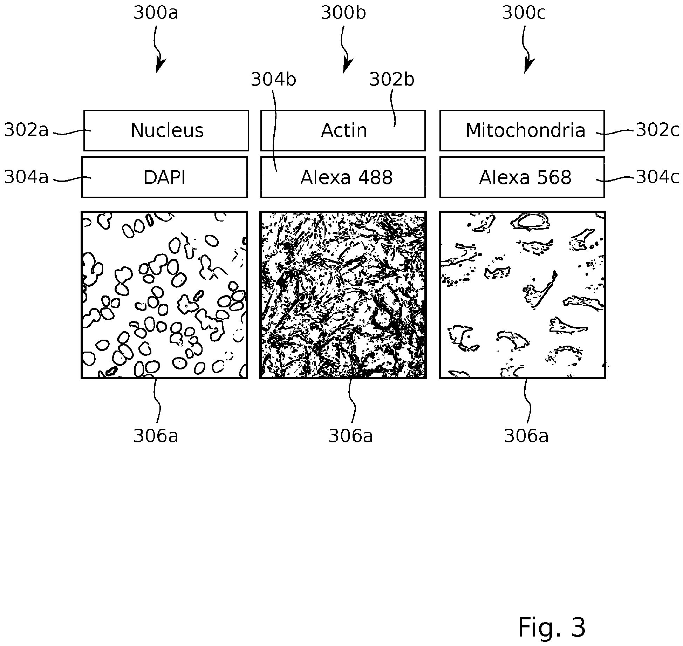

The fluorescence microscope 100 is adapted to obtain fluorescence images 306a, 306b, 306c (c.f. Figure 3) of a sample 104. The fluorescence images 306a, 306b, 306c are images generated from fluorescence light emitted by fluorophores located in the sample 104, in particular following a controlled excitation of the fluorophores. For exciting fluorophores located in the sample 104, the fluorescence microscope 100 exemplary comprises two excitation units 106, 108 each configured to emit excitation light towards 110 a sample 104. A first excitation unit 106 exemplary comprises a source 112 of coherent light, for example a continuous wave laser or a pulsed laser. This source 112 is adapted to emit coherent light of a single wavelength or wavelength band as the excitation light 110. A second excitation unit 108 exemplary comprises another source 114 of coherent light having a broad wavelength spectrum, for example a white light laser. The second excitation unit 108 also comprises an excitation filter 116 for selecting excitation light 110 having a wavelength suitable for exciting fluorescence. The excitation filter 116 may be a switchable filter, to enable different wavelengths to be selected, for example a filter wheel or an acousto optic tunable filter (AOTF). Since the excitation light 110 is used to excite fluorescence in the fluorophores, the wavelength or wavelength band of the excitation light 110 is also called the excitation wavelength.

An optical detection unit 118 of the fluorescence microscope 100 has at least one microscope objective 120 directed at the sample 104. The microscope objective 120 is configured to receive detection light 122 from the sample 104. The detection light 122 comprises multiple components, for example the fluorescence light emitted by the different fluorophores located in the sample 104. In order to distinguish these components, the optical detection unit 118 is exemplary configured to generate three spectral channels to separately detect detection light 122 in a first, a second, and a third wavelength band. In order to generate the three spectral channels, the optical detection unit 118 exemplary comprises an arrangement of beam splitting elements 124a, 124b, for example dichroic elements, in particular switchable dichroic elements, or AOTFs, and detector elements 126a, 126b, 126c. One detector element 126c is exemplary preceded by an emission filter 128 which may be a switchable filter. The beam splitting elements 124a, 124b and/or the emission filter 128 may be used to select which wavelengths of the detection light 122 arrive at which detector elements 126a, 126b, 126c. Thereby, the multiple components of the detection light 122, in particular the fluorescence light emitted by the excited fluorophores, may be detected separately. Alternatively, the three spectral channels maybe generated by other means, for example multispectral or hyperspectral cameras.

The fluorescence microscope 100 is adapted to obtain the fluorescence images 306a, 306b, 306c of the sample 104 in multiple imaging channels 300a, 300b, 300c (c.f. Figure 3). Each of the imaging channels 300a, 300b, 300c corresponds to a distinct imaging setting used to selectively image at least one of the fluorophores. The imaging setting for one imaging channel 300a, 300b, 300c may comprise which spectral channel is used to capture the image 306a, 306b, 306c. But the imaging setting may also comprise further parameters, such as a setting of the excitation unit 106, 108, for example the excitation wavelength, or a setting of the detector element 126a, 126b, 126c, for example an integration time. The device 102 is configured to determine these imaging settings for each of the imaging channels 300a, 300b, 300c, and to perform other tasks based on a user provided information about the sample 104.

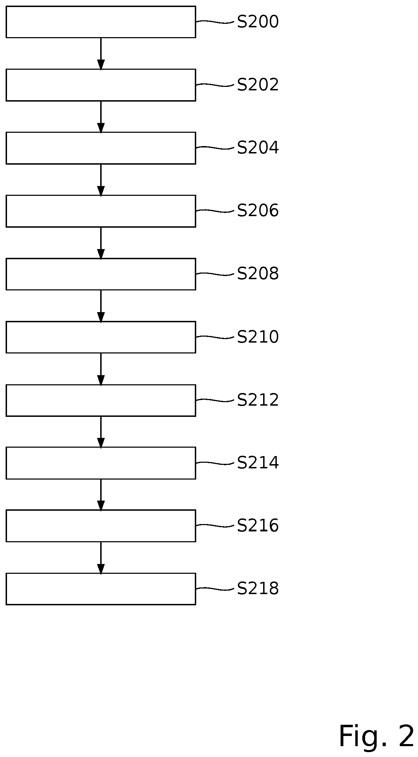

The device 102 comprises a user interface 130 adapted to receive a user input from a user and to output information to the user. In the embodiment shown in Figure 1, the user interface 130 comprises an input device 132 for receiving the user input from a user, and an output device 134, exemplary formed as a display, for outputting visual information to the user. The device 102 further comprises a processor 136 adapted to control the excitation units 106, 108, the optical detection unit 118, and the output device 134; and to receive the user input from the input device 132. The processor 136 is configured to determine the imaging setting for each of the imaging channels 300a, 300b, 300c based on a user input including at least a primary set-up information. Each primary set-up information is associated with one of the imaging channels 300a, 300b, 300c and comprises sample structure information specifying a structural feature of the sample 104, for example a cell nucleus or another organelle. In addition, the processor 136 may also be configured to determine the imaging settings based on a secondary set-up information, such as a dye information that specifies which fluorescent dye is used for imaging the sample 104 in the respective imaging channel 300a, 300b, 300c. The processor 136 is further configured to generate image data for each of the imaging channels 300a, 300b, 300c in accordance with the imaging settings. The process is described in detail below with reference to Figures 2 and 3.

Figure 2 is a flowchart of a method for controlling a fluorescence microscope 100.

The method may be performed using the device 102 described above with reference to Figure 1. The method is started in step S200.

In step S202, the user inputs the primary set-up information for each of the imaging channels 300a, 300b, 300c into the device 102 via the user interface 130. For that, the user may, for example, select a structural feature from a list of structural features presented to the user. The list may be presented as an element of a graphical user interface displayed by the output device 134, such as a dropdown menu or a list box. Such a list of structural features may be generated from a database either stored locally on the device 102 or remotely, for example on a remote server or a cloud service. The user may also specify certain properties of the structural feature manually, for example an estimated size or a shape. In an example, the user sets up a first channel 300a as a cell nuclei channel, i.e. a channel for imaging the cell nuclei of the imaged sample 104, a second channel 300b as an actin filament channel, and a third channel 300c as a mitochondria channel. This highlights the contrast to the typical systems-based approach in which the user would set up, for example, a red channel and a blue channel instead. The three channels 300a, 300b, 300c are shown in Figure 3.

In the optional step S204, the user inputs the secondary set-up information into the device 102 via the user interface 130. Like for the primary set-up information, the user may select a fluorescent dye from a list of fluorescent dyes or specify the properties of the fluorescent dye manually, for example the excitation wavelength. In the aforementioned example, the user provides the secondary set-up information that the actin filaments have been dyed with Alexa 488, the mitochondria have been dyed with Alexa 568, and that the cell nuclei have been dyed with DAPI. The steps S202 and S204 may be performed in any order.

In step 206, the processor 136 executes a set-up process for each imaging channel 300a, 300b, 300c to determine an imaging setting specific to that imaging channel 300a, 300b, 300c based on the primary set-up information. If step S204 was performed, the processor 136 also takes the secondary set-up information into account when determining the imaging settings. The imaging settings define each of the imaging channels 300a, 300b, 300c and comprise a number of imaging parameters, such as the excitation wavelength needed to excite the fluorophore associated with the respective imaging channel. Based on the imaging parameters the actual imaging of the sample 104 is performed in the following steps S208 to S212.

In step S208, the fluorophores are excited using the appropriate excitation light 110 as defined by the imaging settings. For example, the processor 136 causes the excitation units 106, 108 to emit excitation light 110 in the wavelengths dictated by the imaging settings. This can be done consecutively for each of the imaging channels 300a, 300b, 300c, or concurrently for two or more of the imaging channels 300a, 300b, 300c at once. In order to select the correct excitation wavelengths, the processor 136 may select the appropriate excitation filter 116 or control the light source 112, 114 directly in case the light source 112, 114 is tunable.

In step S210, at least one image 306a, 306b, 306c is captured for each of the imaging channels 300a, 300b, 300c. For this, the processor 136 may control the optical detection unit 118 to set up the appropriate spectral channel for each imaging channel. For example, the processor 136 may cause the optical detection unit 118 to select the appropriate dichroic element and/or emission filter 128 according to the imaging settings. The processor 136 may further set up the detector elements 126a, 126b, 126c according to the imaging settings, for example by selecting the detector integration time, detector gain, read-out mode and/or bit depth determined by the respective imaging setting.

In step S212, the image data is generated for each of the imaging channels 300a, 300b, 300c corresponding to the images 306a, 306b, 306c captured in step S210. In the optional step S214, the processor 136 performs image processing on the image data generated in step S212. For that, the processor 136 first determines an image processing setting for each of the imaging channels 300a, 300b, 300c based on the sample structure information and the imaging setting specific to that imaging channel. Various image processing techniques may be employed to enhance the images 306a, 306b, 306c captured by the fluorescence microscope 100, for example a thresholding and/or a background noise reduction. As the image processing setting, the processor 136 selects one or more appropriate techniques and determines necessary parameters. Then, the processor 136 processes the image data generated for each imaging channel 300a, 300b, 300c in accordance with the image processing setting determined for that imaging channel 300a, 300b, 300c.

In the example, the device 102 knows based on the imaging setting, the sample is imaged with a 63x water immersion objective. The user has specified that the imaged structures in the third channel 300c are mitochondria, thus the processor further knows that the image captured in the third channel 300c should contain discreet objects that are approximately 200-700nm in size and typically round but may also be elongated. From this information the device 102 can work out the correct image processing setting required to visualize the mitochondria. The device 102 automatically adjusts image processing parameters best suited for the image data generated by each channel 300a, 300b, 300c. For example, the device 102 adjusts feature scale and strength parameters of a deconvolution program.

After the image data has been processed, the image data may be analyzed in the optional step S216, although unprocessed data may also be analyzed. For analyzing the image data, the processor 136 first determines an analysis setting for each of the imaging channels 300a, 300b, 300c. The analysis settings comprise for each imaging channel 300a, 300b, 300c which analysis technique or techniques to use and the appropriate parameters for each technique. In the example, the processor 136, for example, determines thresholding parameters required to detect the mitochondria imaged in the third channel 300c in an image analysis program.

As analysis techniques, the processor 136 may in particular employ machine learning algorithms, such as specifically trained deep learning algorithms. The user typically looks for a specific variable in the image data for their assay rather than exploring all of the available information that could be extracted from the sample 104. This means that the user will often not spot more subtle variations between populations which can be detected using machine learning algorithms. Once the nature of each imaging channel 300a, 300b, 300c is known to the machine learning algorithm, this additional layer of information can be uncovered. In order to harness this additional layer of information, the device 102 may automatically provide certain information to the user. In the example, the device 102 may automatically provide the user with the average number of mitochondria per cell cells.

The raw, processed and/or analyzed image data may be displayed by the output device 134. The method is then stopped in step S218.

Figure 3 is a schematic view of three exemplary imaging channels 300a, 300b, 300c of the fluorescence microscope 100 according to Figure 1.

Each of the three imaging channels 300a, 300b, 300c is represented in Figure 3 by a first block 302a, 302b, 302c representing the primary set-up information, a second block 304a, 304b, 304c representing the secondary set-up information, and an exemplary image 306a, 306b, 306c captured in the respective imaging channel 300a, 300b, 300c shown in false colors. The first imaging channel 300a is used to capture cell nuclei stained with DAPI. Accordingly, the primary set-up information comprises the information that the imaged structure is a cell nucleus, and the secondary set-up information comprises the information that the used dye is DAPI. Alternatively, the primary set-up information may comprise the information that the imaged structure is compact and oval shaped, characterizing the shape of the cell nuclei. Instead of the information that DAPI is used, the excitation and emission wavelengths of DAPI may have been provided. The second imaging channel 300b is used to capture actin filaments stained with Alexa 488. Here the primary set-up information may instead comprise the information that the imaged structure is long and thin, or strand-like. The third imaging channel 300c is used to capture mitochondria stained with Alexa 568. Like with the first and second imaging channels 300a, 300b, the primary set-up information of the third imaging channel 300c may instead comprise an information characterizing the shape of the mitochondria.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device 102 corresponds to a method step or a feature of a method step. Analogously, aspects described in the context of a method step also represent a description of a corresponding block or item or feature of a corresponding apparatus.

### Reference signs

- 100: fluorescence microscope
- 102: device
- 104: sample
- 106, 108: excitation unit
- 110: excitation light
- 112, 114: source
- 116: excitation filter
- 118: optical detection unit
- 120: objective
- 122: detection light
- 124a, 124b: beam splitting element
- 126a, 126b, 126c: detector element
- 128: emission filter
- 130: user interface
- 132: input device
- 134: output device
- 136: processor
- 300a, 300b, 300c: imaging channel
- 302a, 302b, 302c, 304a, 304b, 304c: block
- 306a, 306b, 306c: image

## Claims

1. A device (102) for controlling a fluorescence microscope (100) having multiple imaging channels (300a, 300b, 300c), each imaging channel (300a, 300b, 300c) being adapted to generate image data representing a sample (104), wherein the device (102) comprises:
a user interface (130) configured to receive a user input including a primary set- up information to be used in a set-up process for setting up each imaging channel (300a, 300b, 300c), and
a processor (136) configured to execute the set-up process for each imaging channel (300a, 300b, 300c) to determine an imaging setting specific to said imaging channel (300a, 300b, 300c) based on the primary set-up information,
wherein the processor (136) is further configured to cause the fluorescence microscope (100) to generate the image data in each imaging channel (300a, 300b, 300c) in accordance with the imaging setting specific to said imaging channel (300a, 300b, 300c), and
wherein the primary set-up information assigned to each imaging channel (300a, 300b, 300c) includes a sample structure information specifying a structural feature of the sample (104).

2. The device (102) according to any claim 1, wherein the sample structure information includes an information specifying a cellular structure of the sample (104).

3. The device (102) according to claim 1 or 2, wherein the processor (136) is configured to use at least one secondary set-up information in the set-up process.

4. The device (102) according to claim 3, wherein the at least one secondary set- up information includes a dye information specific to each imaging channel (300a, 300b, 300c), the dye information specifying a fluorescent dye to be used for imaging the sample (104) in said imaging channel (300a, 300b, 300c).

5. The device (102) according to claim 4, wherein the user interface (130) is configured to receive a user input including the dye information.

6. The device (102) according to any one of the preceding claims, wherein the imaging setting specific to each imaging channel (300a, 300b, 300c) comprises at least one parameter selected from a group including an optical component (106, 108, 116, 120, 124a, 124b, 126a, 126b, 126c, 128) to be used, an excitation wavelength, a fluorescence wavelength, an illumination type, an illumination intensity, a detector integration time, a detector gain, a read-out mode, and a detector bit depth.

7. The device (102) according to any one of the preceding claims, wherein the processor (136) is further configured to determine an image processing setting specific to each imaging channel (300a, 300b, 300c) based on the sample structure information and the imaging setting,
wherein the processor (136) is configured to process the image data in accordance with the image processing setting, and
wherein the processor (136) is adapted to cause a display (134) to visualize the processed image data.

8. The device (102) according to any one of the preceding claims, wherein the processor (136) is further configured to determine an analysis setting specific to each imaging channel (300a, 300b, 300c) based on the sample structure information and the imaging setting, and
wherein the processor (136) is configured to analyze the processed image data visualized on the display in accordance with the analysis setting.

9. The device (102) according to claim 8, wherein the processor (136) is configured to analyze the processed image data using a machine learning algorithm.

10. A fluorescence microscope (100) having multiple imaging channels (300a, 300b, 300c), each imaging channel (300a, 300b, 300c) being adapted to generate image data representing a sample (104), and the device (102) according to any one of the preceding claims.

11. A method for controlling a fluorescence microscope (100) having multiple imaging channels (300a, 300b, 300c), each imaging channel (300a, 300b, 300c) being adapted to generate image data representing a sample (104), wherein the method comprises the following steps:
receiving a user input by means of a user interface (130), the user input including a primary set-up information to be used in a set-up process for setting up each imaging channel (300a, 300b, 300c), and
executing the set-up process for each imaging channel (300a, 300b, 300c) to determine an imaging setting specific to said imaging channel (300a, 300b, 300c) based on the primary set-up information, and
causing the fluorescence microscope (100) to generate the image data in each imaging channel (300a, 300b, 300c) in accordance with the imaging setting specific to said imaging channel (300a, 300b, 300c),
wherein the primary set-up information assigned to each imaging channel (300a, 300b, 300c) includes a sample structure information specifying a structural feature of the sample (104).

12. A computer program with a program code for performing the method according to claim 11.
